# EUROPÄISCHE PATENTSCHRIFT

(11) **EP 1 499 551 B1**
(45) Veröffentlichungstag und Bekanntmachung des Hinweises auf die Patenterteilung: **21.06.2006**
(21) Anmeldenummer: 03706296.5
(22) Anmeldetag: 07.02.2003
(51) Int. Cl.: B65H 26/02, G01N 21/89

(54) **VORRICHTUNG UND VERFAHREN ZUM ERFASSEN EINES BAHNBRUCHS AN EINER EINE BAHN VERARBEITENDEN MASCHINE**
DEVICE AND METHOD FOR DETECTING WEB BREAKAGE IN A WEB PROCESSING MACHINE
PROCEDE ET DISPOSITIF POUR DETECTER UNE RUPTURE DE BANDE SUR UNE MACHINE D'USINAGE DE BANDE

(30) Priorität: 02.05.2002 DE 10219541
(43) Veröffentlichungstag der Anmeldung: 26.01.2005
(73) Patentinhaber: Koenig & Bauer Aktiengesellschaft, 97080 Würzburg (DE)
(72) Erfinder: SEYFRIED, Rüdiger, Karl, 97265 Hettstadt (DE)
(86) Internationale Anmeldenummer: PCT/DE2003/000347
(87) Internationale Veröffentlichungsnummer: WO 2003/095348

(56) Entgegenhaltungen:
- DE-A- 4 130 679
- DE-A- 10 129 889
- DE-A- 19 506 463
- DE-A- 19 611 878
- GB-A- 1 105 357
- US-A- 3 070 365
- US-A- 4 186 309
- US-A- 4 644 174
- US-A- 5 467 194

## Beschreibung

Die Erfindung betrifft eine Vorrichtung und ein Verfahren zum Erfassen eines Bahnbruchs an einer eine Bahn verarbeitenden Maschine gemäß dem Oberbegriff des Anspruchs 1 oder 8.

Vorrichtungen zum Erfassen des Bahnbruchs sind für die Betriebssicherheit von hoher Bedeutung, da ein Bahnbruch dazu führen kann, dass sich die gebrochene Bahn in der Maschine staut oder sich um Walzen der Maschine herumwickelt und dabei Teile der Maschine beschädigt, bevor die Maschine und damit die Bahn angehalten werden kann. Diese zwei Typen von Störungen werden als "Stopfer" bzw. "Wickler" bezeichnet.

Zur Erfassung eines Bahnbruchs ist bekannt, diverse Eigenschaften der Bahn zu überwachen. So wird z. B. in DE 38 22 497 A1 die physische Anwesenheit der Bahn an einem von ihrem unter normalen Betriebsbedingungen verfolgten Weg abweichenden Ort durch einen Schalter überwacht, der bei Kontakt mit der Bahn ausgelöst wird. Ein solcher Schalter kann nur wirksam sein, wenn es an der Stelle, an der er angeordnet ist, im Falle eines Bruchs tatsächlich zu einer Auslenkung der Bahn kommt, also in unmittelbarer Nähe der Bruchstelle. Ein wirksamer Schutz erfordert daher eine große Zahl von Schaltern.

In WO 99 65 808 A1 ist vorgeschlagen, zur Brucherfassung die Spannung einer Materialbahn zu überwachen. Dies ermöglicht mit einer vergleichsweise geringen Zahl von Sensoren eine zuverlässige und frühzeitige Erfassung von Bahnbrüchen, da ein Bahnbruch mit sehr geringer Verzögerung zu einem messbaren Nachlassen der Bahnspannung auch an weit von der Bruchstelle entfernten Orten führt.

Auf diese Weise kann die bahnverarbeitende Maschine zwar zuverlässig vor Beschädigung durch Stopfer und Wickler geschützt werden, doch ergibt sich das Problem, dass nicht nur Bahnrisse die Ursachen von Schwankungen der Bahnspannung sein können. So kann es beim Hochfahren der bahnverarbeitenden Maschine oder allgemein beim Ändern ihrer Geschwindigkeit zu Schwingungserscheinungen kommen, die Spannungsschwankungen in der Bahn verursachen. Diese Spannungsschwankungen sind im Moment ihres Auftretens nur schwer von denen unterscheidbar, die durch einen Bahnriss verursacht werden.

Insbesondere bei Rollendruckmaschinen kann auch der Rollenwechsel Ursache von Spannungsschwankungen sein, die irrtümlich als Bahnriss erfasst werden könnten.

In DE 42 19 645 A1 ist eine Vorrichtung zur Erkennung eines Papierbahnrisses vorgeschlagen, die auf eine Richtungsumkehr der Papierbahn reagiert. Eine solche Richtungsumkehr kann auftreten, wenn in Folge eines Bahnrisses die Bahnspannung so weit abgenommen hat, dass ein weitgehend spannungsloser Abschnitt der Bahn in der Lage ist, an einer Walze der Maschine haften zu bleiben und sich auf dieser aufzuwickeln. Wenn dies geschieht, kann Bahnmaterial, welches die betreffende Walze bereits passiert hat, zurückgezogen und auf die Walze aufgewickelt werden. Wenn die daraus resultierende Richtungsumkehr der Bahn erfasst wird, hat der Wickler an der Walze jedoch bereits begonnen, sich zu bilden. Wenn die Bildung des Wicklers nicht sofort bei Entstehung des Bahnrisses beginnt, kann sich daher an anderer Stelle der Maschine ein umfangreicher Stopfer gebildet haben, bevor die Vorrichtung anspricht.

Eine Vorrichtung zum Erfassen eines Bahnbruchs an einer bahnverarbeitenden Maschine in Abhängigkeit der Geschwindigkeit der Bahn ist aus der DE 101 29 889 A1 bekannt. Dabei erzeugt eine Auswerteeinrichtung ein Bahnbruch-Erfassungssignal in Abhängigkeit von einem von einem Sensor gelieferten Messwert der Geschwindigkeit.

Der Artikel "Funktionsprinzip" der Fa. Polytec GmbH, Waldbronn, beschreibt einen Sensor zur Geschwindigkeitsmessung.

Die DE 200 04 803 U1, die DE 93 20 409 U1 und die DE 41 06 901 C2 beschreiben Vorrichtungen zur Überwachung von Bahnrissen mittels berührungsloser Sensoren.

Der Erfindung liegt die Aufgabe zugrunde, eine Vorrichtung und ein Verfahren zum Erfassen eines Bahnbruchs an einer eine Bahn verarbeitenden Maschine zu schaffen.

Die Aufgabe wird erfindungsgemäß durch die Merkmale des Anspruchs 1 oder 8 gelöst.

Die mit der Erfindung erzielbaren Vorteile bestehen insbesondere darin, dass mit einfachen Mitteln eine genaue Geschwindigkeitsmessung der Bahn und damit eine frühzeitige Erfassung eines Bahnbruchs ermöglicht wird. Anders als bei einem direkt den Dopplereffekt nutzenden Messprinzip, bei dem die als Messgröße erfassbare Frequenzverschiebung eines Abtastsignals proportional zum Verhältnis der Bahngeschwindigkeit zur Ausbreitungsgeschwindigkeit des Abtastsignals (und infolgedessen bei einem lichtschnellen Abtastsignal sehr klein) ist, ist gemäß der Erfindung die Messgröße proportional zum Verhältnis der Bahngeschwindigkeit zur Bewegungsgeschwindigkeit des periodischen Musters. So wird auch bei geringen Bahngeschwindigkeiten eine leicht zu erfassende und mit einfachen Mitteln zu verarbeitende Messgröße erhalten.

Ein weiterer Vorteil ist, dass die Messgröße auch bei in Ruhe befindlicher Bahn nicht verschwindet, so dass mit der Erfindung die Unterscheidung zwischen einer ruhenden und einer nicht vorhandenen Bahn möglich ist.

Die Vorrichtung kann auch bei wechselnden Bahngeschwindigkeiten weitgehend autonom arbeiten, wenn die Auswerteeinrichtung eingerichtet ist, den Sollwert, mit dem sie einen aktuellen Geschwindigkeitsmesswert des Sensors vergleicht, aus früheren vom Geschwindigkeitssensor gelieferten Messwerten zu berechnen. Dies kann durch eine gleitende Mittelwegbildung erfolgen, wobei die Zeitkonstante des Mittelwerts kurz genug zu wählen ist, so dass Geschwindigkeitsänderungen der Bahn, die sich aus gewollten Steuerungsvorgängen ergeben, etwa beim Anfahren der bahnverarbeitenden Maschine, nicht zu einem Ansprechen des Sensors führen.

Eine andere Möglichkeit ist, dass die Auswerteeinrichtung den Sollwert, mit dem sie den aktuellen Messwert eines gegebenen Geschwindigkeitssensors vergleicht, von einem Messwert oder Messwerten ableitet, der/die von wenigstens einem anderen Geschwindigkeitssensor geliefert wird/werden, z. B. aus virtueller Leitachse.

Differenzen zwischen den von den verschiedenen Sensoren erfassten Geschwindigkeiten weisen auf einen zwischen ihnen aufgetretenen Bahnbruch hin.

Alternativ kann die Vorrichtung mit einem Eingang zum Anlegen eines für den Sollwert repräsentativen Signals ausgestattet sein. Ein solches Signal kann z. B. von der bahnverarbeitenden Maschine geliefert werden, z. B. virtuelle oder reale Leitachsengeschwindigkeit, es kann aber auch von einem zweiten Geschwindigkeitssensor geliefert werden.

Ein Ausführungsbeispiel der Erfindung ist in den Zeichnungen dargestellt und wird im folgenden näher beschrieben.

Es zeigen:
- Fig. 1: eine schematische Darstellung einer Druckmaschine, die mit einer Vorrichtung zum Erfassen eines Bahnbruchs ausgestattet ist;
- Fig. 2: eine schematische Darstellung des Geschwindigkeitssensors der Vorrichtung.

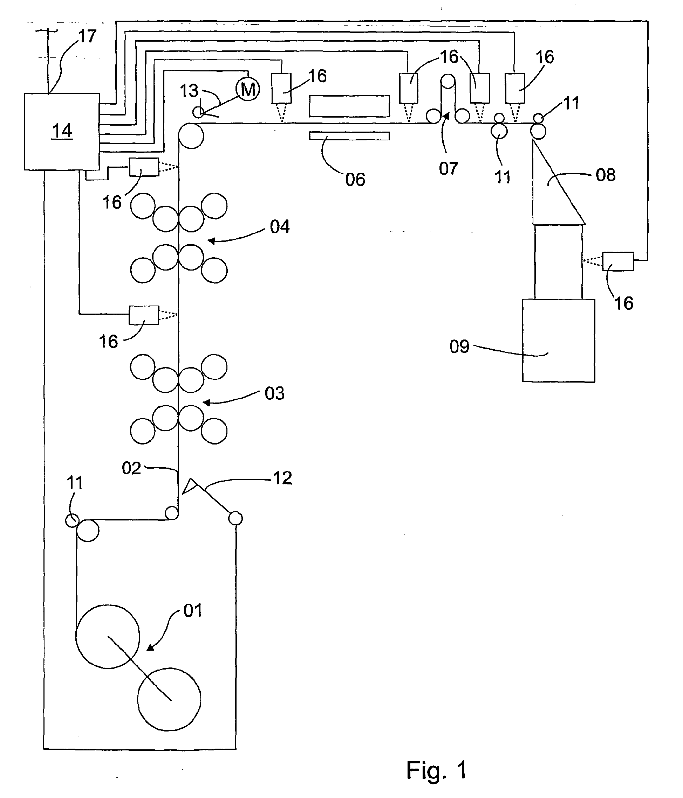

Die in Fig. 1 dargestellte Druckmaschine umfasst einen Rollenwechsler 01, von dem eine zu bedruckende und zu überwachende Bahn 02, z. B, eine Fapierbahn 02, abgewickelt wird, zwei Druckeinheiten 03; 04, eine Trockeneinrichtung 06, eine Kühlwalzenanordnung 07, einen Falztrichter 08 und einen Falzapparat 09, die von der Bahn 02 der Reihe nach durchlaufen werden. Diese Einrichtungen sind allgemein bekannt und werden deshalb hier nicht im Detail beschrieben.

Zugwalzenpaare 11 sind an verschiedenen Stellen auf dem Weg der Bahn 02 angeordnet und werden angesteuert, um eine gewünschte Zugspannung der Bahn 02 gleichmäßig aufrechtzuerhalten. Diverse Schutzeinrichtungen 12; 13 für den Fall eines Bahnbruches sind entlang des Weges der Bahn 02 angeordnet. Eine erste dieser Schutzeinrichtungen 12 ist ein Messer 12, das am Eingang der ersten Druckeinheit 03 angeordnet ist, um die Bahn 02 umgehend zu kappen, wenn ein Bahnbruch innerhalb der Druckmaschine erfasst wird und so den Nachschub an Bahnmaterial, der zu Wicklern und Stopfern in der Druckmaschine führen könnte, schnellstmöglich zu unterbinden.

Als weitere Schutzeinrichtung 13 ist eine Fangeinrichtung 13 am Eingang der Trockeneinrichtung 06 angeordnet, die dazu dient, im Falle eines Bahnbruchs die von den Druckeinheiten 03; 04 abgegebene Bahn 02 abzulenken und aufzufangen, bevor sie die Trockeneinrichtung 06 erreichen kann. Die Fangeinrichtung 13 vermeidet Rückzugswickler in den Druckeinheiten 03; 04.

Die Schutzeinrichtungen 12; 13 werden angesteuert von einer Auswerteeinrichtung 14. Diese ist mit einer Mehrzahl von an verschiedenen Stellen des Weges der Bahn 02 angeordneten Sensoren 16 zum Erfassen der Bahngeschwindigkeit verbunden. In der Fig. 1 sind Sensoren 16 jeweils am Ausgang jeder Druckeinheit 03; 04 vor und hinter der Trockeneinrichtung 06, hinter der Kühlwalzenanordnung 07, vor dem Eintritt der Bahn 02 in den Falztrichter 08, sowie zwischen dem Falztrichter 08 und dem Falzapparat 09 angeordnet. Die Auswerteeinrichtung 14 hat ferner einen Eingang 17, über den sie einen Sollwert der Bahngeschwindigkeit von einer (nicht dargestellten) Steuerung der Druckmaschine empfängt.

Die Auswerteeinrichtung 14 liefert ein Bahnbrucherfassungssignal, welches die Schutzeinrichtungen 12, 13 aktiviert und einen Nothalt der Druckmaschine auslöst, sobald sie eine Abweichung eines der von den Sensoren 16 gelieferten Messwerte vom Sollwert erfasst, die einen vorgegebenen Prozentsatz des Sollwertes überschreitet.

Bei einer vereinfachten Variante der Bahnbruch-Erfassungsvorrichtung entfällt der Eingang 17; stattdessen wird der Geschwindigkeits-Sollwert, mit dem der Messwert eines einzelnen Sensors 16 in der Auswerteeinrichtung 14 verglichen wird, von Messwerten anderer Sensoren 16 abgeleitet. Dies kann z. B. in einfacher Weise geschehen durch Mittelwertbildung über die von den anderen Sensoren 16 erfassten Geschwindigkeitsmesswerte.

Eine andere Möglichkeit ist, dass die Auswerteeinrichtung 14 zwei Mittelwerte bildet, einen über die Geschwindigkeitsmesswerte derjenigen Sensoren 16, die in Laufrichtung der Bahn 02 vor einem jeweils betrachteten Sensor 16 angeordnet sind, und einen zweiten über die Messwerte der hinter ihm angeordneten Sensoren 16, den vom betrachteten Sensor 16 gelieferten Messwert mit beiden Mittelwerten vergleicht und das Bahnbrucherfassungssignal dann liefert, wenn der Messwert von wenigstens einem dieser Mittelwerte um mehr als den vorgegebenen Prozentsatz und einer vorgegebenen Steilheit (Steigung) abweicht. So wird vermieden, dass sich eine Verlangsamung der Bahn 02 vor einer Bruchstelle und eine Beschleunigung hinter der Bruchstelle gegenseitig ausmitteln.

Wenn bei einer abermals vereinfachten Ausgestaltung lediglich zwei Sensoren 16 an die Auswerteeinrichtung 14 angeschlossen sind, so kann einer von ihnen als Lieferant des Sollwertsignals aufgefasst werden, mit dem die vom anderen Sensor 16 erfasste Geschwindigkeit verglichen wird.

Denkbar ist auch, die Auswerteeinrichtung 14 mit einem einzigen Sensor 16 zu betreiben; in diesem Falle kann vorgesehen werden, dass die Auswerteeinrichtung 14 den Geschwindigkeits-Sollwert, mit dem sie die vom Sensor 16 zu einem gegebenen Zeitpunkt erfasste Geschwindigkeit vergleicht, als gleitenden Mittelwert von früher vom gleichen Sensor 16 erfassten Geschwindigkeitswerten berechnet.

Es besteht ferner die Möglichkeit, die Auswerteeinrichtung 14 so auszulegen, dass sie wenigstens zwei der oben für die verschiedenen Varianten beschriebenen Vergleiche parallel durchführt. So kann z. B., wenn nach einem Bahnriss die von verschiedenen Sensoren 16 erfassten Geschwindigkeiten vom Sollwert nach oben und unten abdriften, durch Vergleichen dieser Geschwindigkeiten miteinander der Bahnriss noch früher erfasst werden als durch Einzelvergleiche der Geschwindigkeiten mit dem Sollwert.

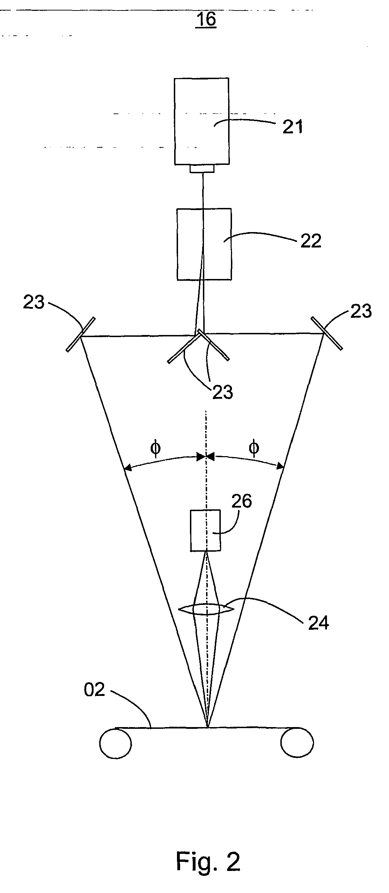

Fig. 2 zeigt schematisch die Struktur eines im Rahmen der vorliegenden Erfindung bevorzugten Sensor 16, z. B. einen Geschwindigkeitssensors 16. Der Geschwindigkeitssensor 16 umfasst eine Projektionseinrichtung zum Projizieren eines bewegten Linienmusters auf die Bahn 02 und einen Lichtdetektor zum Erfassen von von dem Lichtmuster zurückgeworfenem Licht. Die Projektionseinrichtung ist aufgebaut aus einer frequenzstabilisierten Laserdiode 21, insbesondere eine Halbleiter-Laserdiode, die einen Laserstrahl in einen akustoptischen Modulator bzw. eine Bragg-Zelle 22 abgibt. Ein Teil des Laserstrahls durchläuft die Bragg-Zelle 22 unverändert; ein anderer Teil wird an einer in der Bragg-Zelle 22 angeregten Resonanzschwingung mit einer Frequenz von z. B. 40 MHz abgelenkt und um die Resonanzfrequenz frequenzverschoben. Die auf diese Weise erhaltenen zwei Strahlen werden, über Spiegel 23 geführt, an der Oberfläche der Bahn 02 zur Überlappung gebracht. Ihre Interferenz erzeugt dort ein Streifenmuster mit einem Streifenabstand Δs=λ/2 sin ϕ, wobei λ die Wellenlänge der Laserdiode 21 und ϕ der Winkel der zwei interferierenden Strahlen zur Oberflächennormalen der Bahn 02 ist. Die Phasendifferenz der zwei interferierenden Strahlen an jedem Punkt der Bahnoberfläche variiert in Folge der Frequenzverschiebung, mit der Folge, dass sich das Streifenmuster mit einer Geschwindigkeit v=Δs x f_{d} über die Oberfläche der Bahn 02 bewegt, wobei f_{d} die Frequenzdifferenz zwischen den zwei Strahlen ist.

Das von der Oberfläche der Bahn 02 reflektierte Licht wird über eine Linse 24 auf einen Photodetektor 26 gelenkt. Dieser liefert ein elektrisches Ausgangssignal, dessen Amplitude der empfangenen Lichtintensität entspricht.

Wenn ein Punkt auf der mit dem Streifenmuster beleuchteten Oberfläche der Bahn 02 in Ruhe ist, variiert die von ihm zurückgeworfene Lichtintensität mit der Resonanzfrequenz f_{d} der Bragg-Zelle 22. Bewegt sich ein solcher Punkt gleichsinnig mit dem Streifenmuster, so ist die Frequenz der Intensitätsänderung proportional zur Geschwindigkeit verringert; bei einer Bewegung gegensinnig zur Laufrichtung des Streifenmusters ist sie entsprechend proportional erhöht. D. h., das Ausgangssignal des Photodetektors 26 enthält eine oszillierende Komponente, deren Frequenz abhängig ist von der Geschwindigkeit der Bahn 02. Eine Frequenzmessschaltung zum Erfassen dieser Frequenz und Liefern eines zu ihr proportionalen Ausgangssignals kann Teil des Sensors 16 sein, sie kann aber auch innerhalb der Auswerteeinrichtung 14 realisiert sein.

Ein für die Zwecke der Erfindung wichtiger Vorteil dieses Typs von Geschwindigkeitssensor 16 ist, dass er es erlaubt, auch das Nichtvorhandensein einer Bahn 02 eindeutig zu erkennen. Anders als der in DE 42 19 645 A1 beschriebene Sensor, der eine mit Sollgeschwindigkeit bewegte Bahn nicht von einer fehlenden Bahn zu unterscheiden vermag, liefert der oben beschriebene Sensor 16 in beiden Fällen deutlich unterschiedliche Signale. Wenn keine Bahn 02 vorhanden ist, empfängt der Sensor 16 der Vorrichtung kein rückreflektiertes Licht, und infolgedessen ist die oszillierende Komponente im Ausgangssignal des Photodetektors 26 nicht vorhanden. Auch dieser Zustand kann von der Auswerteeinrichtung 14 erfasst und als Anlass zum Erzeugen des Bahnbruch-Erfassungssignals genommen werden.

Auch ist es möglich, dass bei mehreren Bahnen 02 der Sensor 16 wahlweise verschiedenen Bahnen 02 zugeordnet werden kann.

### Bezugszeichenliste

- 01: Rollenwechsler
- 02: Bahn, Papierbahn
- 03: Druckeinheit
- 04: Druckeinheit
- 05: -
- 06: Trockeneinrichtung
- 07: Kühlwalzenanordnung
- 08: Falztrichter
- 09: Falzapparat
- 10: -
- 11: Zugwalzenpaar
- 12: Schutzeinrichtung, Messer
- 13: Schutzeinrichtung, Fangeinrichtung
- 14: Auswerteeinrichtung
- 15: -
- 16: Sensor, Geschwindigkeitssensor
- 17: Eingang
- 18: -
- 19: -
- 20: -
- 21: Laserdiode
- 22: Bragg-Zelle
- 23: Spiegel
- 24: Linse
- 25: -
- 26: Photodetektor

- φ: Winkel

## Patentansprüche

1. Vorrichtung zum Erfassen eines Bahnbruchs an einer eine Bahn (02) verarbeitenden Maschine, mit einem die Geschwindigkeit der Bahn (02) überwachenden Sensor (16) und einer Auswerteeinrichtung (14) zum Erzeugen eines Bahnbruch-Erfassungssignals in Abhängigkeit von einem vom Sensor (16) gelieferten Messwert der Geschwindigkeit, **dadurch gekennzeichnet, dass** der Sensor (16) eine Projektionseinrichtung (21, 22, 23) zum Projizieren eines in Laufrichtung der Bahn (02) bewegten periodischen Lichtmusters auf die Bahn (02), einen Photodetektor (26) zum Erfassen von von dem Lichtmuster zurückgeworfenem Licht und eine Frequenzmessschaltung zum Erfassen der Frequenz einer oszillierenden Komponente der vom Photodetektor (26) erfassten Lichtintensität aufweist.

2. Vorrichtung nach Anspruch 1, **dadurch gekennzeichnet, dass** die Projektionseinrichtung (21, 22, 23) einen Laser (21), insbesondere eine Halbleiter-Laserdiode, und eine Bragg-Zelle (22) umfasst.

3. Vorrichtung nach Anspruch 1 oder 2, **dadurch gekennzeichnet, dass** die Auswerteeinrichtung (14) eingerichtet ist, das Bahnbruch-Erfassungssignal zu erzeugen, wenn sie eine Abweichung des Messwertes von einem Sollwert von mehr als einem vorgegebenen Bruchteil des Sollwerts erfasst.

4. Vorrichtung nach Anspruch 3, **dadurch gekennzeichnet, dass** die Auswerteeinrichtung (14) eingerichtet ist, denn Sollwert aus früheren vom Sensor (16) gelieferten Messwerten zu berechnen.

5. Vorrichtung nach Anspruch 3 oder 4, **dadurch gekennzeichnet, dass** eine Mehrzahl von Sensoren (16) angeordnet ist, und dass die Auswerteeinrichtung (14) eingerichtet ist den Sollwert, mit dem der Messwert eines der Sensoren (16) verglichen wird, anhand wenigstens eines von einem anderen der Sensoren (16) gelieferten Messwerts festzulegen.

6. Vorrichtung nach einem der Ansprüche 3 bis 5, **dadurch gekennzeichnet, dass** die Auswerteeinrichtung (14) einen Eingang (17) zum Anlegen eines für den Sollwert repräsentativen Signals aufweist.

7. Vorrichtung nach Anspruch 1, **dadurch gekennzeichnet, dass** mehrere Bahnen (02) angeordnet sind und der Sensor (16) wahlweise verschiedenen Bahnen (02) zugeordnet ist.

8. Verfahren zum Erfassen eines Bahnbruchs an einer eine Bahn (02) verarbeitenden Maschine, mit den Schritten:
- Projizieren eines in Laufrichtung der Bahn (02) bewegten periodischen Lichtmusters auf die Bahn (02);
- Erfassen von von dem Lichtmuster zurückgeworfenem Licht;
- Erfassen der Frequenz einer oszillierenden Komponente des zurückgeworfenen Lichts;
- Vergleichen der von der Frequenz repräsentierten Geschwindigkeit der Bahn (02) mit dem Sollwert und Erzeugen des Bahnbruchsignals in Abhängigkeit vom Ergebnis des Vergleichs.

## Claims

1. An apparatus for detecting a web break on a machine processing a web (02), with a sensor (16) monitoring the speed of the web (02) and an evaluation device (14) for generating a web-break detection signal in a manner dependent upon a measurement value of the speed supplied by the sensor (16), **characterized in that** the sensor (16) comprises a projection device (21, 22, 23) for projecting onto the web (02) a periodic light pattern moved in the running direction of the web (02), a photodetector (26) for detecting light reflected by the light pattern, and a frequency-measuring circuit for detecting the frequency of an oscillating component of the light intensity detected by the photodetector (26).

2. An apparatus according to Claim 1, **characterized in that** the projection device (21, 22, 23) comprises a laser (21), in particular a semiconductor laser diode, and a Bragg cell (22).

3. An apparatus according to Claim 1 or 2, **characterized in that** the evaluation device (14) is set up to generate the web-break detection signal when it detects a deviation of the measurement value from a nominal value of more than one predetermined fraction of the nominal value.

4. An apparatus according to Claim 3, **characterized in that** the evaluation device (14) is set up to calculate the nominal value from earlier measurement values supplied by the sensor (16).

5. An apparatus according to Claim 3 or 4, **characterized in that** a plurality of sensors (16) are provided, and the evaluation device (14) is set up to fix the nominal value, with which the measurement value of one of the sensors (16) is compared, with reference to at least one measurement value supplied by another of the sensors (16).

6. An apparatus according to any one of Claims 3 to 5, **characterized in that** the evaluation device (14) has an input (17) for the application of a signal which is representative of the nominal value.

7. An apparatus according to Claim 1, **characterized in that** a plurality of webs (02) are provided, and the sensor (16) is selectively associated with different webs (02).

8. A method of detecting a web break on a machine processing a web (02), with the steps:
- projecting onto the web (02) a periodic light pattern moved in the running direction of the web (02);
- detecting light reflected by the light pattern;
- detecting the frequency of an oscillating component of the reflected light, and
- comparing the speed of the web (02) represented by the frequency with the nominal value, and generating the web-break detection signal in a manner dependent upon the result of the comparison.

## Revendications

1. Dispositif pour détecter une rupture de bande sur une machine transformant une bande (02), avec un capteur (16) surveillant la vitesse de la bande (02), et un dispositif d'évaluation (14) pour générer un signal de détection de rupture de bande en fonction d'une valeur de mesure, fournie par un capteur (16), de la vitesse, **caractérisé en ce que** le capteur (16) présente un dispositif de projection (21,22,23) pour projeter sur la bande (02) un motif lumineux périodique, déplacé dans la direction de défilement de la bande (02), un photo-détecteur (26) pour détecter la lumière réfléchie par le motif lumineux et un circuit de mesure de fréquence pour détecter la fréquence d'une composante oscillante de l'intensité lumineuse détectée par le photo-détecteur (26).

2. Dispositif selon la revendication 1, **caractérisé en ce que** le dispositif de projection (21,22,23) comprend un laser (21), en particulier une diode laser à semi-conducteur et une cellule de Bragg (22).

3. Dispositif selon la revendication 1 ou 2, **caractérisé en ce que** le dispositif d'évaluation (14) est agencé pour produire le signal de détection de rupture de bande lorsqu'un écart de la valeur de mesure par rapport à une valeur de consigne, écart supérieur à une fraction prédéterminée de la valeur de consigne, est détecté.

4. Dispositif selon la revendication 3, **caractérisé en ce que** le dispositif d'évaluation (14) est agencé pour calcule la valeur de consigne d'après des valeurs de mesure antérieures, fournies par le capteur (16).

5. Dispositif selon la revendication 3 ou 4, **caractérisé en ce qu'**une pluralité de capteurs (16) est disposée et **en ce que** le dispositif d'évaluation (14) est agencé pour fixer la valeur de consigne à laquelle est comparée la valeur de mesure d'un des capteurs (16), à l'aide d'au moins une valeur de mesure fournie par un autre des capteurs (16).

6. Dispositif selon l'une des revendications 3 à 5, **caractérisé en ce que** le dispositif d'évaluation (14) présente une entrée (17) pour application d'un signal représentatif de la valeur de consigne.

7. Dispositif selon la revendication 1, **caractérisé en ce que** plusieurs bandes (02) sont disposées et le capteur (16) est associé, au choix, à différentes bandes (02).

8. Procédé de détection d'une rupture de bande sur une machine transformant une bande (02), comprenant les étapes consistant à :
- projeter sur la bande (02) un motif lumineux périodique, déplacé dans la direction de défilement de la bande (02) ;
- détecter la lumière réfléchie par le motif lumineux ;
- détecter la fréquence d'une composante oscillante de la lumière réfléchie ;
- comparer la vitesse, représentée par la fréquence, de la bande (02) à la valeur de consigne et générer le signal de rupture de bande en fonction du résultat de la comparaison.
